# EUROPEAN PATENT SPECIFICATION

(11) **EP 1 615 141 B1**
(45) Date of publication and mention of the grant of the patent: **07.03.2018**
(21) Application number: 05000514.9
(22) Date of filing: 12.01.2005
(51) Int. Cl.: G01C 21/36, G06F 15/78, H04N 21/214

(54) **A COMPUTING ARCHITECTURE FOR A MOBILE MULTIMEDIA SYSTEM USED IN A VEHICLE**
RECHNERARCHITEKTUR FÜR IN EINEM FAHRZEUG VERWENDBARES MOBILES MULTIMEDIASYSTEM
ARCHITECTURE D'ORDINATEUR POUR UN SYSTÈME MULTIMEDIA MOBILE UTILISÉ DANS UN VÉHICULE

(30) Priority: 01.07.2004 US 584934 P
(43) Date of publication of application: 11.01.2006
(73) Proprietor: Harman Becker Automotive Systems GmbH, 76307 Karlsbad (DE)
(72) Inventor: Rupprecht, Matthias, 75344 Straubenhardt (DE); Erforth, Thomas, 76185 Karlsruhe (DE)
(74) Representative: Grünecker Patent- und Rechtsanwälte PartG mbB

(56) References cited:
- EP-A- 0 668 560
- EP-A- 1 000 810
- EP-A1- 1 022 658
- WO-A-99/48021
- US-A- 6 009 363
- P. EKAS: "Leveraging FPGA coprocessors to optimize automotive infotainment and telematics systems" EMBEDDED COMPUTING DESIGN, [Online] April 2004 (2004-04), pages 1-5, XP002380638 Retrieved from the Internet: URL:http://www.embedded-computing.com/pdfs /Altera.Sum04.pdf> [retrieved on 2006-05-10]
- PARNELL K: "Telematics digital convergence - How to cope with emerging standards and protocols" XILINX WHITE PAPER, 27 May 2003 (2003-05-27), pages 1-10, XP002318756
- PARNELL K: "REFCONFIGURABLE VEHICLES" ANNOUNCEMENT XILINX, 19 November 2001 (2001-11-19), pages 1-16, XP001160504
- MIYAMORI T ET AL: "A quantitative analysis of reconfigurable coprocessors for multimedia applications", FPGAS FOR CUSTOM COMPUTING MACHINES, 1998. PROCEEDINGS. IEEE SYMPOSIUM ON NAPA VALLEY, CA, USA 15-17 APRIL 1998, LOS ALAMITOS, CA, USA,IEEE COMPUT. SOC, US, 15 April 1998 (1998-04-15), pages 2-11, XP010298174, DOI: 10.1109/FPGA.1998.707876 ISBN: 978-0-8186-8900-0

## Description

The present invention relates to mobile multimedia navigation systems used in vehicles and in particular, to a computing architecture for such system.

Multimedia navigation systems have recently found a high use and demand as it conveniently combines telematic, navigation and entertainment functions for the driver and other passengers of vehicles. In present systems, current customers' requirements are satisfied by providing a hardware platform for realizing various functions and components, such as radio, CD or DVD player, telematics module, navigation unit, TV and audio receiver. Enhanced systems provide professional sound combined with speech dialogue systems or other user interfaces to control the individual components and functions of the multimedia navigation system itself or other car body functions like climate control. A so-called head-unit provides central control functionality and there is a trend to integrate priorly separate external devices into the head-unit to reduce the number of external components.

US 6,577,937 B1 and US 2003/0065432 A1 provide examples for a computing architecture including a data network comprised of a plurality of interconnected processors, sensors and databases to realize various vehicle operations, such as cruise control, automated mayday and obstacle/collision warning systems among others. The computing architecture organizes the applications and systems in the vehicle into groups, e.g. driver assistance systems, mobile services and information systems.

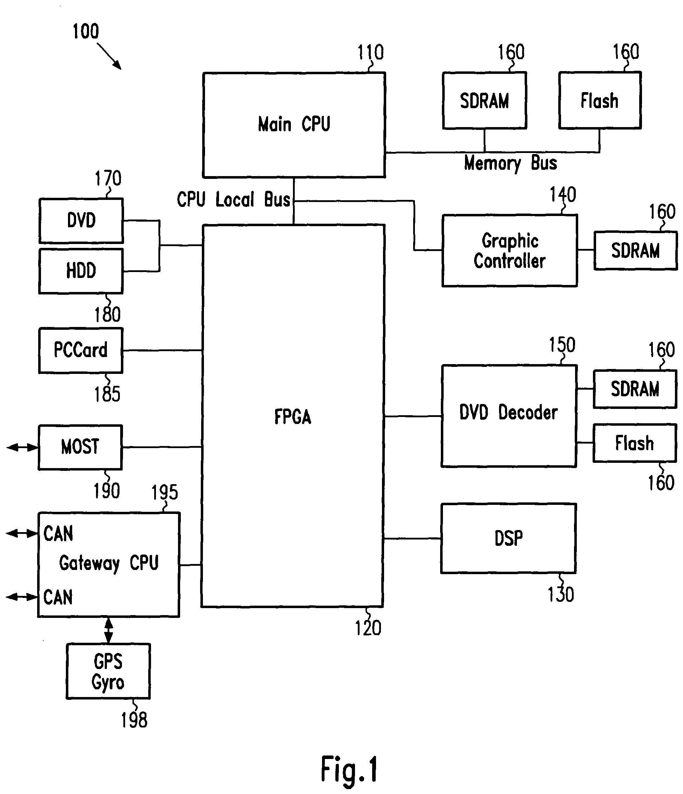

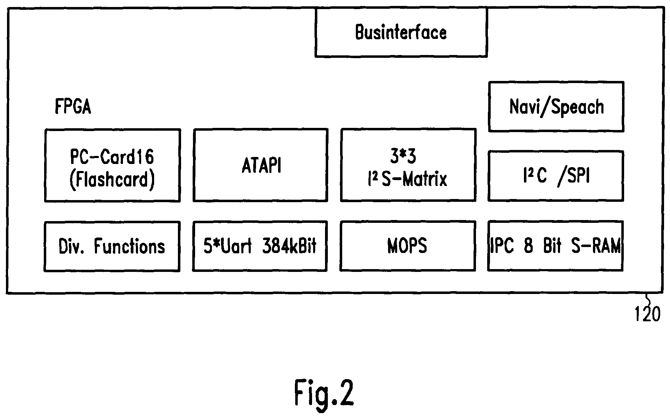

Figures 1 and 2 show details of a conventional computing architecture including typical modules and electrical components interconnected by data buses to realize various functions of a multimedia navigation system. The architecture also includes interface modules for providing a connection to external components. More specifically, the dashed line indicates a computing unit 100 comprising a main CPU 110, a field programmable gate array (FPGA) 120, a digital signal processor (DSP) 130, a graphic chip 140 and a digital versatile disc (DVD) decoder chip 150. As apparent from the figure, the main CPU 110, the graphic chip 140 and the DVD decoder 150 are assigned external memory 160.

Corresponding memory busses having preferably a size of 8, 16, 32 or 64 bits are provided for exchange of data between the memory and the CPU. Exchange of data between main CPU 110, FPGA 120, DSP 130 and graphic chip 140 is realized by the processor local bus.

As further apparent from figure 1, the FPGA 120 communicates with various external devices and interfaces including DVD 170 or hard disk drive (HDD) 180. The connection is realized, for instance, by an ATAPI (AT attachment packet interface) interface between the FPGA and the DVD/HDD drive.

Moreover, through means of a PC-card standard bus, the FPGA 120 may communicate with a PCMCIA card. Further interconnections are provided to a MOST interface unit 190 and a controller area network (CAN) interface module 195. Finally, a connection to a GPS module using, for instance, the universal asynchronous receiver-transmitter (UART) protocol is provided.

Figure 2 shows details of the computing unit 100 and in particular, illustrates the functionality provided in the FPGA 120 using exemplary interface modules. Like reference numerals have been assigned to corresponding components already described with reference to Figure 1.

With even faster processors in the small scale parts, additional integrated circuit components must be placed on the circuit board to realize enhanced functionality. This renders the overall system extremely complex and less flexible in terms of exchanging and enhancing individual functions. Hence, the implementation of a new function becomes very difficult, if not impossible, when it must be implemented in hardware.

This problem is increased by the shortened schedule lifetime. Some functions and requirements, especially audio and video compressing and decoding will follow new standards and it would be a huge benefit to expand in the field the functionality to these new features. However, this is presently only possible by exchanging the complete circuit board.

P. Ekas: "Leveraging FPGA coprocessors to optimize automotive infotainment and telematics systems", EMBEDDED COMPUTING DESIGN, pages 1-5, XP002380638, describes an automotive infotainment system which integrates data communications video entertainment by integrating FPGA coprocessors into mainstream automotive telematic system architectures. The architecture comprises an FPGA and a companion ASIC connected via a standard bus wherein the graphics processor is capable of supporting interactive graphics and scaling functions but does not provide video codec functionality or other DSP applications.

WO 99/48021 relates to a computer system for multi-media applications in vehicles wherein the system comprises two processor modules which are independent of each other for different multi-media tasks and real-time security applications.

EP-668560 A2 relates to coexecuting methods and means for performing parallel processing in conventional types of data processing systems. The architecture allows offloading functions from central processors in a data processing system, as requested by one or more executing control programs, which include a host operating system and subsystem programs.

US 6,009, 363 relates to a vehicle computer system comprising a support module and a computer module which are operatively connected with each other via a multi-bit. The support module includes a logic unit which is, among others, responsible for coordinating the entertainment functionality of the computer system. The logic unit may be implemented as a field programmable gate array or as a microprocessor or as a RISC processor.

Miyamori T et al: " A quantitative analysis of the reconfigurable coprocessors for multimedia applications". (IEEE Comput. Soc, US, 15 April 1998, pages 2, 11, XP010298174, ISBN: 978-0-8186-8900-0) relates to a reconfigurable co-processor architecture wherein a global control unit controls the execution of a reconfigurable logic array (FPGA) and the transfer of data between the main processor and the reconfigurable logic array through co-processor data registers.

EP 1 022 658 A1 relates to a method involving the determination in each processor its actual load condition, if necessary directly from its polyvalent load state, and estimating an available load in response to existing distribution quotas and a typically distributed share of a typical task, which leads to a polyvalent load balancing indicator.

The object of the present invention is to provide a computing architecture to be used in a mobile multimedia navigation system of a vehicle which allows to reduce the start-up time of the system.

This object is solved by a computing architecture for a mobile multi-media navigation system as set forth in claim 1.

The idea underlying the present invention is the recognition that an open and scalable hardware architecture may be realized by transferring additional functionality to a field programmable gate array. Upon system startup or system operation, the field programmable array may load data from memory to realize application-specific functionality. As this functionality may be easily updated by loading some updated software into memory, a high flexibility and scalability in terms of function and features is attained. This concept may be considered as "soft-wired" function blocks.

The computing architecture comprises two central processors, wherein high priority or real-time applications are assigned to one processor, while lower priority applications are assigned to the other processor. Such architecture significantly reduces the startup time for the system, which is a highly demanding feature for a mobile navigation system.

Upon completion of system startup, applications are transferred from one processor to another to achieve improved balancing of tasks between the processors. Thus, the individual load imposed upon each processor may be more easily levelled by means of an intelligent task management.

The two processors and the FPGA are connected via a standardized bus system which allows scalability in terms of number of processors and data transfer rate. Data can be exchanged between all three with the intention to process the data at the source either in software on the processor or in hardware accelerators in the FPGA to minimize the data streams over the bus.

According to a preferred embodiment, the field programmable gate array additionally serves as a scalable hardware interface between the central processor and the peripheral components. In addition, scalable performance can be achieved by, for example, changing the clock frequency and number of processors or varying the available memory size.

According to a further advantageous embodiment, the computing architecture is adapted in a manner that system functions, such as graphic/video processing, DVD decoding or DSP functions are shared between the application software running on the central processor(s) and the field programmable gate array in a way that the gate array performs a pre- or post processing of input/output data. In this way, a flexible implementation of functions by priorly implemented hardware-based modules in software is obtained. Such functions include graphic tasks, navigation, speech dialogue systems, DVD decoding, telephone base band functions including noise cancellation, just to name a few.

According to a further preferred embodiment, time-critical or computing intensive functions are realized by means of dedicated hardware accelerators in the field programmable gate array. This also results in an increase in performance.

According to a preferred embodiment, the usage of a standardized bus system like PCI minimizes the amount of development work for the components interfacing and provides independence from processor manufacturers. Even the usage of two different processors from different manufacturers is possible.

Typically, a PCI bus transmits 32 bits at a time in a 61-pin connection and 64 bits in a 100 pin connection in an expanded implementation. The PCI bus uses all active paths to transmit address and data signals, sending the address on one clock cycle and data on the next.

In conclusion, the solution underlying the invention provides the advantage of reducing the amount of hardware and integrated circuits necessary in the past to enable the respective functionality leading to enormous cost savings and independence from vendors providing parts, such as graphic and controller chips. Moreover, the design of the computing architecture becomes extremely flexible and scalable while the overall system performance is increased.

In the following, the invention will be described in further detail by means of exemplary preferred embodiments with reference to the accompanying drawings.
- Figure 1: shows a conventional computing architecture for a mobile multimedia navigation system;
- Figure 2: illustrates further details of the computing unit shown in figure 1;
- Figure 3: illustrates the computing architecture according to the invention; and
- Figure 4: shows details of the computing unit shown in figure 3 to illustrate the principles of the present invention.

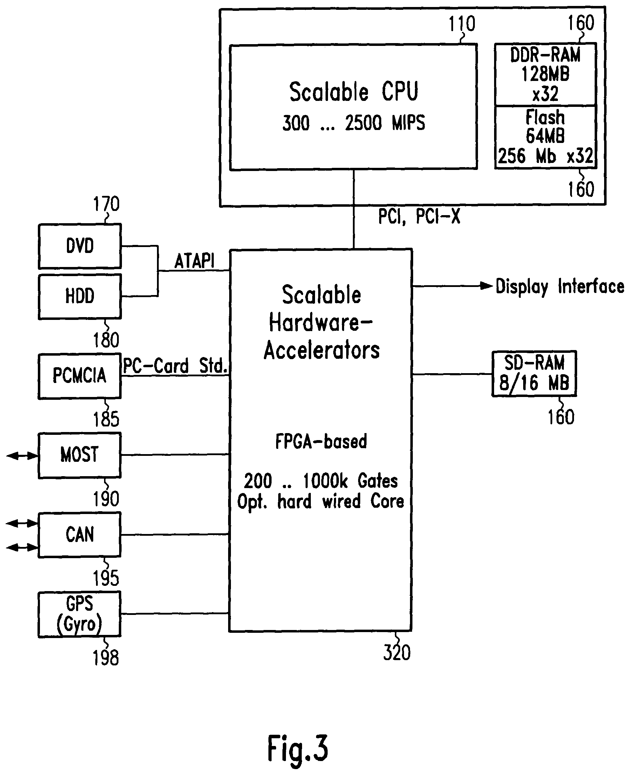

In figure 3, reference numerals have been assigned to corresponding components that have already been described above with reference to figures 1 and 2. Hence, the details of these components will not be repeated for the sake of conciseness.

As apparent from figure 3, the main difference to the conventional computing architecture lies in the extended functionality of the field programmable gate array FPGA 320, optionally including a hard-wired processor core and for instance, having a capacity of 200..1000 k gates.

Details of the design and performance of FPGAs are apparent to those skilled in the art. Generally, FPGA denotes an integrated circuit programmed in the field, i.e. by the system manufacturer. An advantage of the FPGAs is the possibility of remotely upgrading the hardware already installed in the system. Rather than manual replacement of the electronic circuit board the user of FPGAs is allowed to update the hardware remotely in the same manner as performing a software upgrade. Thus, FPGAs theoretically allow unlimited reprogramming and reconfiguration in a very fast and easy manner. More information, e.g. circuit diagram details on FPGAs, is available from manufacturers, such as ACTEL, ALTERA, ATMEL, CYPRESS, LUCENT, XILINX.

As a general overview, most FPGAs follow a common approach: a regular, flexible, programmable architecture of configurable logic blocks surrounded by a perimeter of programmable input/output blocks. These functional elements are interconnected by a powerful hierarchy of versatile routing channels. Values stored in static memory cells control all configurable logic elements and interconnect resources. These values loaded into the memory cells on power-up and can reload, if necessary, to change the function of the device.

Just to name an example, the above-described architecture has been implemented by SPARTAN-II FPGAs, a device family launched by XILINX in mid-2000.

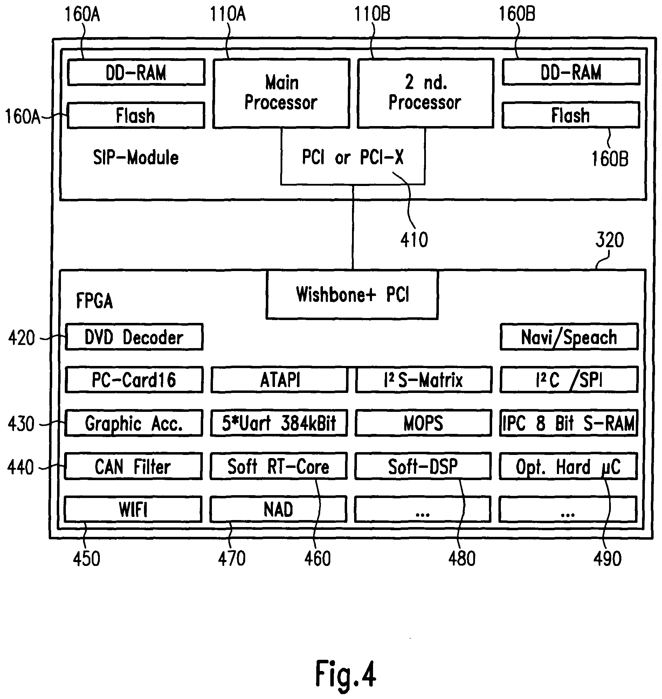

As illustrated in figure 4, the computing architecture designed in accordance with the principles of the present invention realizes additional, application-specific functionality, for instance, digital signal processing 480, graphic accelerator 430, CAN filtering 440, wireless LAN WIFI 450, Network Access Device NAD 470 and DVD decoding 420. The following is a non-exhaustive list of additional functions serving for exemplary purposes. For the main task of digital signal processing, functions which can be realized in the FPGA concern sample rate conversion compressed audio decoding, such as MP3, WMA, AAC. The functionalities relating to DVD are for instance video and audio signal decoding or decompression techniques, such as MPEG2 or MPEG4. Graphic processing output tasks are for instance, frame buffer control, bit block transfer, alpha blending, display interface control. Serial interfaces are realized by UART, I2C, or SPI, whereas network interfacing is implemented by techniques, such as MOST, CAN message filtering or a CAN-MOST gateway.

The dual processor 110A, 110B architecture will make an extremely short start/up time possible. This highly demanded feature may be realized by different strategies. For instance, as soon as the system has to start up, one processor can provide basic and safety critical functions like network communication or parking distance control, whereas the second processor can prepare non time critical but nevertheless computing intensive functions like DVD Video play. Another possibility is to use the processor in the FPGA to perform a quick start-up whereas the other processors start normally in a proper order.

Furthermore, the dual processor approach allows the distribution and execution of applications on different processors depending on their priority. For instance, all high priority tasks (e.g. CAN gateway or safety applications) or real time applications may share one processor. For this processor, the necessary computing power for all applications will always be available. All other times uncritical applications may share the second one. In this way both demands for real time and numerous applications are satisfied.

In an advantageous embodiment, at least one of the central processors and the memory assigned thereto are integrated either on a module or directly on the mainboard in die-onboard technology. The die-on board technology reduces EMI and allows more efficient cooling techniques which is needed with furthermore increasing processor clock frequencies. Board size and therefore cost is reduced. The integration on a module increases the reusability of already designed parts and therefore reduces the development time and failure rate. Further integration and cost reduction can be achieved by integrating the two processors on one die.

As explained in the foregoing, the computing architecture according to the invention allows to integrate scalable and flexible functionality, in particular, critical and time consuming functions, such as graphic calculation, decoding or digital signal processing into the FPGA. A flexible update of new functions is readily achieved by reprogramming the FPGA code and adding new software modules.

## Claims

1. A computing architecture in a vehicle multimedia navigation system comprised of a plurality of interconnected electrical components including a memory (160, 160A, 160B) and a field programmable gate array (320) connected with each other by means of a standardized data bus (410) for the exchange of data between the components, wherein the field programmable gate array (320) is adapted, upon system start-up or during system operation, to load data from the memory to realize application-specific functionality by means of logic functions implemented inside the field programmable gate array (320),
**characterized by**
the architecture further comprising two central processors (110A, 110B) connected via the standardized data bus (410) with the field programmable gate array (320), wherein high priority or real-time applications are assigned to one central processor and lower priority applications are assigned to the other central processor, and
wherein upon completion of the system start-up, an application may be transferred for handling from the one central processor (110A, 110B) to the other central processor.

2. The computing architecture according to claim 1, wherein the field programmable gate array (320) serves as a scaleable hardware interface between the central processors (110, 110A, 110B) and peripheral components such as external memory (170, 180, 185), display, network (195, 190), mass storage, input/output system controller or other peripheral input/output components (198).

3. The computing architecture according to claim 1 or 2, wherein system functions like graphic/video processing, DVD decoding (420) or DSP functions (480) are shared between the application software running on one of the central processors (110, 110A, 110B) and the field programmable gate array in a way that the field programmable gate array (320) performs a pre- or postprocessing of I/O data.

4. The computing architecture according to one of claims 1 to 3, wherein time-critical or computing intensive functions are realized by means of dedicated hardware accelerators (320).

5. The computing architecture according to one of claims 1 to 4, wherein the memory is a double data rate RAM (160A, 160B) or a flash memory (160A, 160B).

6. The computing architecture according to one of claims 1 to 5, wherein the at least one central processor (110, 110A, 1108) and the memory (160, 160A, 160B) are integrated as a module.

7. The computing architecture according to one of claims 1 to 6, wherein the application-specific functionality includes at least one of DVD decoding (420), digital signal processing (480) and graphic functions (430).

8. The computing architecture according to one of claims 1 to 7, wherein the field programmable gate array (320) contains an embedded processor core for implementing a hardware accelerator.

## Patentansprüche

1. Rechenarchitektur in einem Multimedia-Navigationssystem eines Fahrzeugs, die eine Vielzahl von miteinander verbundenen elektrischen Komponenten umfasst, darunter einen Speicher (160, 160A, 160B) und ein feldprogrammierbares Gate-Array (320), die mithilfe eines standardisierten Datenbusses (410) für den Datenaustausch zwischen den Komponenten miteinander verbunden sind, wobei das feldprogrammierbare Gate-Array (320) angepasst ist, um beim Systemstart oder während des Betriebs des Systems Daten aus dem Speicher zu laden, um anwendungsspezifische Funktionalität mithilfe von Logikfunktionen zu realisieren, die in dem feldprogrammierbaren Gate-Array (320) implementiert sind, **gekennzeichnet dadurch, dass**
die Architektur ferner zwei Zentralprozessoren (110A, 110B) umfasst, die über den standardisierten Datenbus (410) mit dem feldprogrammierbaren Gate-Array (320) verbunden sind, wobei Anwendungen mit einer hohen Priorität bzw. Echtzeitanwendungen einem Zentralprozessor zugewiesen sind und Anwendungen mit einer niedrigeren Priorität dem anderen Zentralprozessor zugewiesen sind und
wobei eine Anwendung bei Abschluss des Systemstarts zur Verarbeitung von dem einen Zentralprozessor (110A, 110B) an den anderen Zentralprozessor übertragen werden kann.

2. Rechenarchitektur nach Anspruch 1, wobei das feldprogrammierbare Gate-Array (320) als eine skalierbare Hardwareschnittstelle zwischen den Zentralprozessoren (110, 110A, 110B) und Periepheriekomponenten, wie etwa einem externen Speicher (170, 180, 185), einer Anzeige, einem Netzwerk (195, 190), einem Massenspeicher, einer Eingabe-/Ausgabesystemsteuerung oder anderen Peripherieeingabe-/- ausgabekomponenten (198), dient.

3. Rechenarchitektur nach Anspruch 1 oder 2, wobei Systemfunktionen, wie Grafik-/Videoverarbeitung, DVD-Dekodierung (420) oder DSP-Funktionen (480), von der Anwendungssoftware, die auf einem der Zentralprozessoren (110, 110A, 110B) ausgeführt wird, und dem feldprogrammierbaren Gate-Array auf eine Weise geteilt werden, dass das feldprogrammierbare Gate-Array (320) ein Vor- oder Nachbearbeiten von E-/A-Daten durchführt.

4. Rechenarchitektur nach einem der Ansprüche 1 bis 3, wobei zeitkritische oder rechenintensive Funktionen mithilfe dedizierter Hardwarebeschleuniger (320) realisiert werden.

5. Rechenarchitektur nach einem der Ansprüche 1 bis 4, wobei der Speicher ein Double-Data-Rate-RAM (160A, 160B) oder ein Flash-Speicher (160A, 160B) ist.

6. Rechenarchitektur nach einem der Ansprüche 1 bis 5, wobei der zumindest eine Zentralprozessor (110, 110A, 110B) und der Speicher (160, 160A, 160B) als ein Modul integriert sind.

7. Rechenarchitektur nach einem der Ansprüche 1 bis 6, wobei die anwendungsspezifische Funktionalität zumindest eines von DVD-Decodierung (420), digitaler Signalverarbeitung (480) und Grafikfunktionen (430) beinhaltet.

8. Rechenarchitektur nach einem der Ansprüche 1 bis 7, wobei das feldprogrammierbare Gate-Array (320) einen eingebetteten Prozessorkern zum Implementieren eines Hardwarebeschleunigers enthält.

## Revendications

1. Architecture d'ordinateur dans un système de navigation multimédia de véhicule composé d'une pluralité de composants électriques interconnectés comprenant une mémoire (160, 160A, 160B) et un réseau de portes programmables par l'utilisateur (320) connectés l'un à l'autre par l'intermédiaire d'un bus de données standardisé (410) pour l'échange de données entre les composants, dans laquelle le réseau de portes programmables par l'utilisateur (320) est conçu, après le démarrage du système ou au cours du fonctionnement du système, pour charger des données à partir de la mémoire afin de réaliser une fonctionnalité spécifique à l'application par l'intermédiaire de fonctions logiques implémentées à l'intérieur du réseau de portes programmables par l'utilisateur (320),
**caractérisé par**
l'architecture comprenant en outre deux processeurs centraux (110A, 110B) connectés via le bus de données standardisé (410) avec le réseau de portes programmables par l'utilisateur (320), dans laquelle des applications de haute priorité ou en temps réel sont attribuées à un processeur central et des applicables de priorité inférieure sont attribuées à l'autre processeur central, et
dans laquelle après la réalisation du démarrage du système, une application peut être transférée pour le traitement du processeur central (110A, 110B) vers l'autre processeur central.

2. Architecture d'ordinateur selon la revendication 1, dans laquelle le réseau de portes programmables par l'utilisateur (320) sert d'interface matérielle extensible entre les processeurs centraux (110, 110A, 110B) et des composants périphériques tels que la mémoire externe (170, 180, 185), l'écran, le réseau (195, 190), le stockage de masse, le contrôleur de système d'entrée/de sortie ou d'autres composants d'entrée/de sortie périphériques (198).

3. Architecture d'ordinateur selon la revendication 1 ou 2, dans laquelle les fonctions de système telles que le traitement graphique/vidéo, le décodage DVD (420) ou les fonctions DSP (480) sont partagées entre le logiciel d'application exécuté sur l'un des processeurs centraux (110, 110A, 110B) et le réseau de portes programmables par l'utilisateur de telle façon que le réseau de portes programmables par l'utilisateur (320) effectue un prétraitement ou un post-traitement de données E/S.

4. Architecture d'ordinateur selon l'une quelconque des revendications 1 à 3, dans laquelle les fonctions à durée critique ou les fonctions intenses en calcul sont réalisées par l'intermédiaire d'accélérateurs matériels dédiés (320).

5. Architecture d'ordinateur selon l'une quelconque des revendications 1 à 4, dans laquelle la mémoire est une RAM à débit binaire double (160A, 160B) ou une mémoire flash (160A, 160B).

6. Architecture d'ordinateur selon l'une quelconque des revendications 1 à 5, dans laquelle l'au moins un processeur central (110, 110A, 110B) et la mémoire (160, 160A, 160B) sont intégrés en tant que module.

7. Architecture d'ordinateur selon l'une quelconque des revendications 1 à 6, dans laquelle la fonctionnalité spécifique à l'application comprend au moins l'un parmi le décodage DVD (420), le traitement de signaux numériques (480) et les fonctions graphiques (430).

8. Architecture d'ordinateur selon l'une quelconque des revendications 1 à 7, dans laquelle le réseau de portes programmables par l'utilisateur (320) comporte un coeur de processeur intégré pour implémenter un accélérateur matériel.
